# EUROPÄISCHE PATENTSCHRIFT

(11) **EP 3 135 510 B1**
(45) Veröffentlichungstag und Bekanntmachung des Hinweises auf die Patenterteilung: **28.03.2018**
(21) Anmeldenummer: 16180561.9
(22) Anmeldetag: 21.07.2016
(51) Int. Cl.: B60C 23/16, B60C 23/10, B60C 23/14

(54) **VORRICHTUNG ZUR STEUERUNG DES LUFTDRUCKS IN LUFTREIFEN EINES ANHÄNGERS**
DEVICE FOR CONTROLLING THE AIR PRESSURE IN TYRES OF A TRAILER
DISPOSITIF DE COMMANDE D'UNE PRESSION D'AIR DANS DES PNEUMATIQUES D'UNE REMORQUE

(30) Priorität: 27.08.2015 AT 507432015
(43) Veröffentlichungstag der Anmeldung: 01.03.2017
(73) Patentinhaber: Schausberger, Heinrich, 4871 Zipf (AT); Preuner, Michael, 4843 Ampflwang (AT)
(72) Erfinder: Schausberger, Heinrich, 4871 Zipf (AT); Preuner, Michael, 4843 Ampflwang (AT)
(74) Vertreter: Patentanwaltskanzlei Hübscher

(56) Entgegenhaltungen:
- WO-A1-2011/033015
- DE-A1- 3 806 322
- IT-B- 1 245 655

## Beschreibung

Die Erfindung bezieht sich auf eine Vorrichtung zur Steuerung des Luftdrucks in Luftreifen eines Anhängers einer landwirtschaftlichen Zugmaschine mit einem von einem Verdichter beaufschlagbaren Druckluftspeicher und mit einem an den Druckluftspeicher anschließbaren, über Steuerventile mit den Luftreifen verbundenen Druckluftverteiler.

Um beim Befahren nicht befestigter, landwirtschaftlich genutzter Flächen den Auflagedruck von Zugmaschinen und Anhängern zu verringern, wird Luft aus den Luftreifen dieser Fahrzeuge ausgelassen. Diese Maßnahme erfordert allerdings eine Erhöhung des Luftdrucks in den Luftreifen für Fahrten auf befestigten Flächen, was insbesondere für Anhänger zu Schwierigkeiten führt, weil beispielsweise das für pneumatische Bremsanlagen vorgesehene Druckluftsystem hierfür aufgrund des begrenzten Bremsluftdrucks nicht eingesetzt werden kann. Es wurde daher vorgeschlagen (WO 2010/091843 A1), für die Steuerung des Luftdrucks in den Luftreifen von Anhängern einen gesonderten Verdichter am Zugfahrzeug vorzusehen und mithilfe dieses Verdichters einen Druckluftspeicher auf dem Anhänger über eine Druckluftkupplung zu beaufschlagen, sodass der Druck in den Luftreifen des Anhängers über einen an diesen Druckluftspeicher angeschlossenen Druckluftverteiler gesteuert werden kann. Nachteilig ist allerdings, dass jeder Anhänger mit einem solchen Druckluftspeicher ausgerüstet sein muss und dass ein Nachrüsten landwirtschaftlicher Zugmaschinen mit einem zusätzlichen Verdichter für höhere Luftdrücke wegen der im Allgemeinen gedrängten Platzverhältnisse Schwierigkeiten macht.

Damit eine Baueinheit aus Verdichter und Druckluftspeicher an eine landwirtschaftliche Zugmaschine in einfacher Weise angebaut und über eine Zapfwelle angetrieben werden kann, ist es außerdem bekannt (IT 1245655 B), die Baueinheit an die heckseitigen Dreipunktlenker der Zugmaschine anzuschließen und zwischen der Zapfwelle und dem Verdichter ein Übersetzungsgetriebe und einen Lüfter vorzusehen. Der Anbau dieser Baueinheit verhindert jedoch das Anhängen eines Anhängers.

Der Erfindung liegt somit die Aufgabe zugrunde, auch unter dem Gesichtspunkt eines möglichen Nachrüstens einfache konstruktive Vorkehrungen zu treffen, den Druck der Luftreifen von Anhängern einer landwirtschaftlichen Zugmaschine an die jeweiligen Anforderungen rasch anpassen zu können.

Ausgehend von einer Vorrichtung der eingangs geschilderten Art zur Steuerung des Luftdrucks in Luftreifen eines Anhängers einer landwirtschaftlichen Zugmaschine löst die Erfindung die gestellte Aufgabe dadurch, dass der mit dem Verdichter eine als Frontgewicht an die landwirtschaftliche Zugmaschine anschließbare Baueinheit bildende Druckluftspeicher einen Druckluftbehälter mit zwei durch einen Mittenabschnitt verbundenen Seitenteilen umfasst und dass der Verdichter zwischen den beiden Seitenteilen auf dem Mittenabschnitt des Druckluftbehälters angeordnet ist.

Durch die Zusammenfassung des Verdichters und des Druckluftspeichers zu einer Baueinheit auf der landwirtschaftlichen Zugmaschine wird zunächst der Vorteil erreicht, dass auf den Anhängern keine Druckluftspeicher vorgesehen werden müssen und daher im Bedarfsfall bei allen Anhängern, deren Luftreifen über einen Druckluftverteiler mit Druckluft versorgt werden können, in einfacher Weise eine Steuerung des Luftdrucks in den Luftreifen möglich wird. Da die Baueinheit aus Verdichter und Druckluftspeicher als Frontgewicht eingesetzt wird, das in üblicher Art an die landwirtschaftliche Zugmaschine angeschlossen werden kann, entfallen sonst auftretende Schwierigkeiten, die mit der Unterbringung ausreichend großer Druckluftspeicher und der für sie vorgesehenen Verdichter verbunden sind, und zwar mit dem Vorteil einer günstigen Lastverteilung. Die Bauweise des Druckluftbehälters mit zwei durch einen Mittenabschnitt verbundenen Seitenteilen in Verbindung mit der Anordnung des Verdichters zwischen den beiden Seitenteilen auf dem Mittenabschnitt des Druckluftbehälters erlaubt eine gute Anpassung der Baueinheit an die Form üblicher Frontgewichte für landwirtschaftliche Zugmaschinen. Die Verdichteranordnung lässt außerdem den Antrieb des Verdichters entweder über einen Hydraulikmotor oder eine Zapfwelle der landwirtschaftlichen Zugmaschine offen.

Zum Anschluss der Baueinheit an ein Fronthubwerk der Zugmaschine kann der Druckluftbehälter im Bereich der der landwirtschaftlichen Zugmaschine zugekehrten Rückwand der Seitenteile und auf einem die Seitenteile verbindenden, den Mittenabschnitt überbrückenden Träger in einspringenden Ausnehmungen angeordnete Anlenkachsen zum Anschließen des Druckluftbehälters an ein Fronthubwerk der Zugmaschine aufweisen, sodass die aus dem Druckluftspeicher und dem Verdichter gebildete Baueinheit wie sonst ein übliches Frontgewicht an die Dreipunktlenker des Fronthubwerks der landwirtschaftlichen Zugmaschine angeschlossen werden kann.

Da zur Druckluftversorgung der Luftreifen von Anhängern landwirtschaftlicher Zugmaschinen mit vergleichsweise hohen Luftdrücken gearbeitet werden muss, kommt der Druckfestigkeit des Druckluftbehälters des Druckluftspeichers eine besondere Bedeutung zu. Den diesbezüglichen Anforderungen kann in vorteilhafter Weise entsprochen werden, wenn der mit einem Boden, einer Decke und einem Mantel versehene Druckluftbehälter einerseits durch Fachböden und anderseits durch die Fachböden durchsetzende Steher zwischen dem Boden und der Decke ausgesteift wird. Das durch diese Aussteifung vergrößerte Gewicht des Druckluftbehälters kommt der Funktion der Baueinheit aus Druckluftspeicher und Verdichter als Frontgewicht zugute.

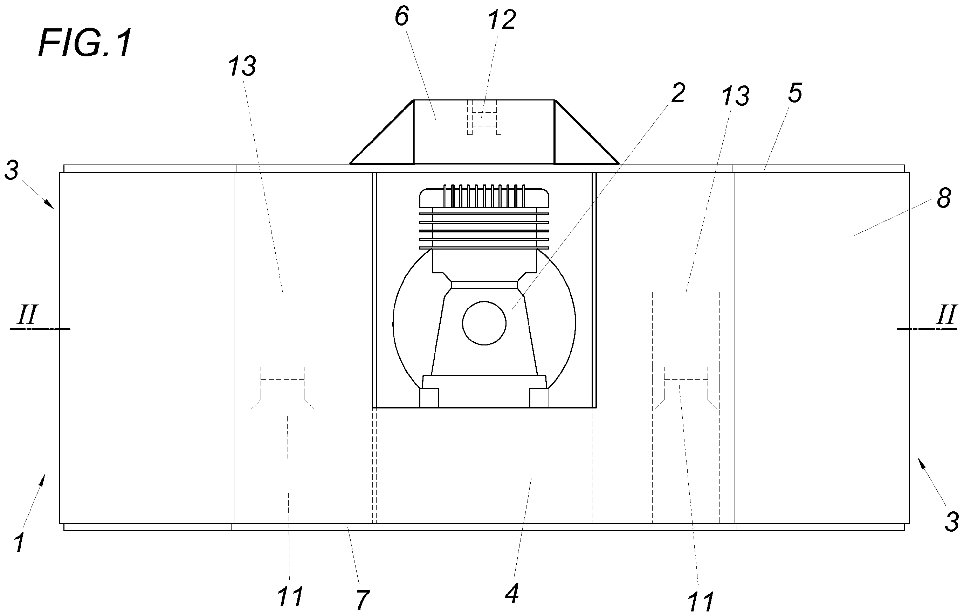

In der Zeichnung ist der Erfindungsgegenstand beispielsweise dargestellt. Es zeigen
Fig. 1 eine erfindungsgemäße Vorrichtung in einer schematischen Vorderansicht,

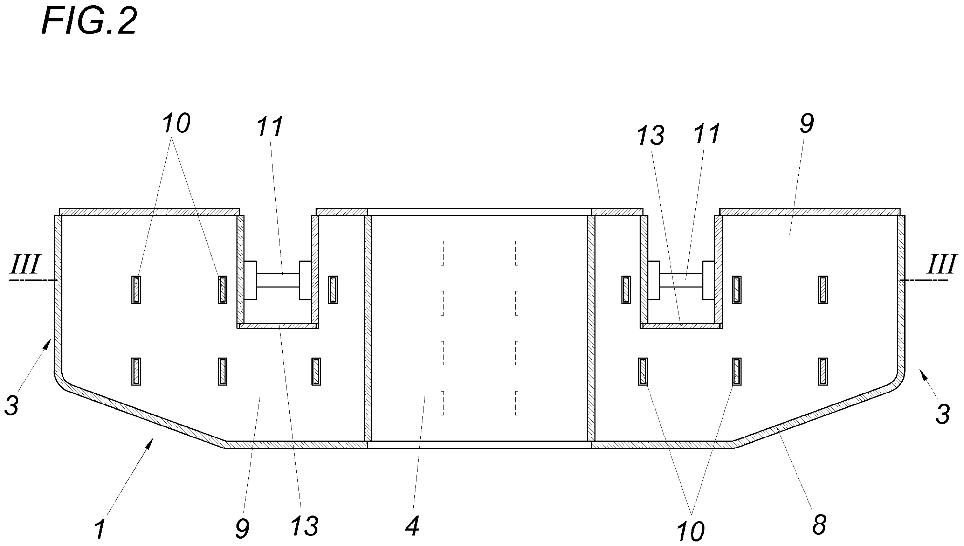

Fig. 2 diese Vorrichtung in einem Schnitt nach der Linie II-II der Fig. 1,

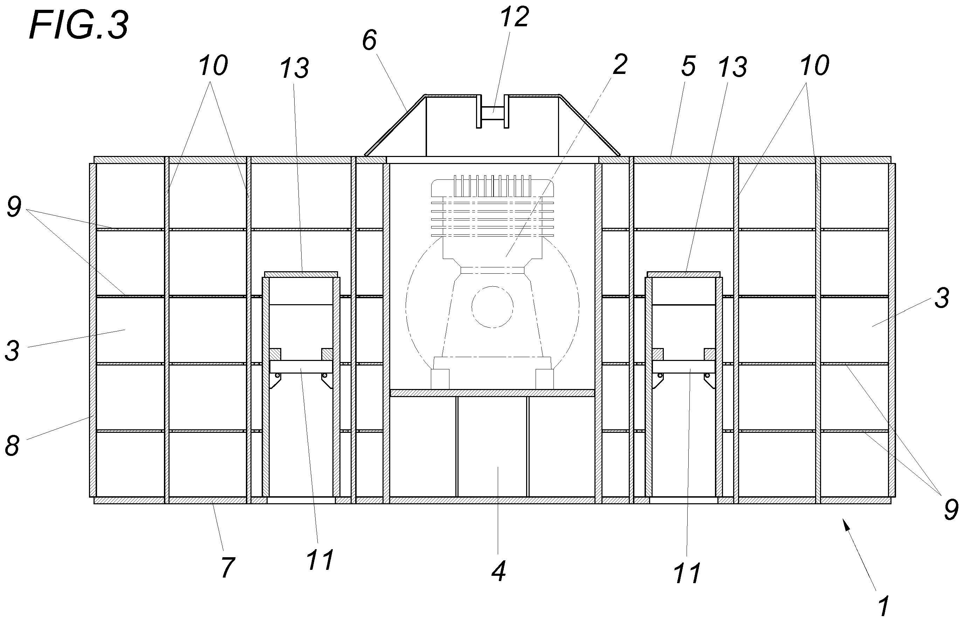

Fig. 3 einen Schnitt nach der Linie III-III der Fig. 2 und

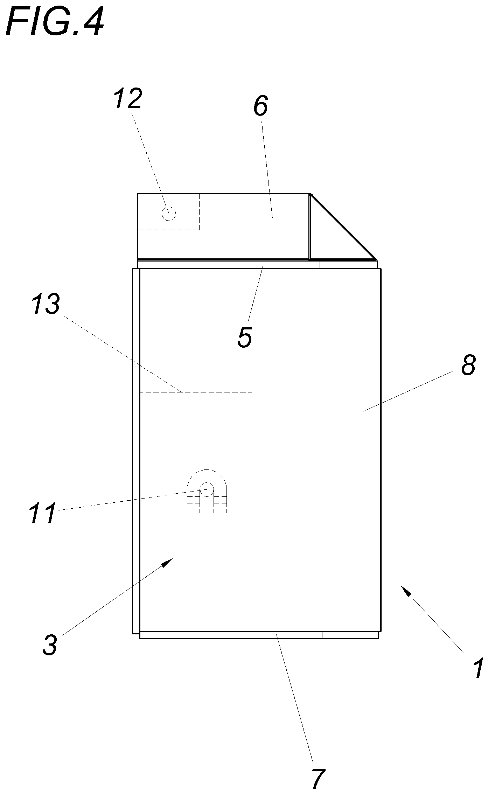

Fig. 4 die Vorrichtung in einer Seitenansicht.

Die dargestellte Vorrichtung bildet eine aus einem Druckluftspeicher 1 und einem Verdichter 2 gebildete Baueinheit in Form eines Frontgewichts für eine landwirtschaftliche Zugmaschine, insbesondere für einen Ackerschlepper mit einem Fronthubwerk. Der Druckluftspeicher 1 umfasst einen Druckluftbehälter, der zwei Seitenteile 3 und einen diese Seitenteile 3 verbindenden Mittenabschnitt 4 aufweist. Der Verdichter 2 ist zwischen den beiden Seitenteilen 3 des Druckluftspeichers 1 auf dem Mittenabschnitt 4 gelagert und wird durch einen den Mittenabschnitt 4 überbrückenden, die beiden Seitenteile 3 im Bereich ihrer Decke 5 verbindenden Träger 6 abgedeckt.

Der zwischen einem Boden 7 und der Decke 5 vorgesehene Mantel 8 des Druckluftbehälters wird durch zum Boden 7 parallele Fachböden 9 ausgesteift. Zusätzlich sind zwischen dem Boden 7 und der Decke 5 Steher 10 vorgesehen, die die Fachböden 9 mit Spiel durchsetzen, sodass der Druckluftbehälter eine auch für höhere Luftdrücke ausreichende Druckfestigkeit aufweist und durch die Aussteifungen mittels der Fachböden 9 und der Steher 10 eine für die Funktion als Frontgewicht ausreichende Masse erhält.

Zum Anschließen der aus dem Druckluftspeicher 1 und dem Verdichter 2 gebildeten Baueinheit an ein Fronthubwerk einer landwirtschaftlichen Zugmaschine ist der Druckluftspeicher 1 mit Anlenkachsen 11 und 12 versehen. Die Anordnung ist dabei so getroffen, dass die Anlenkachsen 11 für die beiden Unterlenker des Fronthubwerks in einspringenden Ausnehmungen 13 in der der Zugmaschine zugekehrten Rückwand der Seitenteile 3 angeordnet sind. Die Anlenkachse 12 für den Oberlenker des Fronthubwerks ist in einer entsprechenden Ausnehmung des Trägers 6 vorgesehen. Die Baueinheit aus Verdichter 2 und Druckluftspeicher 1 kann somit wie jedes andere Frontgewicht vom Fronthubwerk der landwirtschaftlichen Zugmaschine aufgenommen werden, wobei der Verdichter 2 von einer Zapfwelle der landwirtschaftlichen Zugmaschine angetrieben werden kann, wenn nicht hierfür ein gesonderter Antrieb, beispielsweise ein Hydraulikmotor, vorgesehen wird.

Zur Steuerung des Drucks der Luftreifen eines Anhängers braucht lediglich der Druckluftbehälter 1 über eine entsprechende Druckluftkupplung mit dem auf dem Anhänger vorgesehenen Druckluftverteiler verbunden zu werden, um durch eine geeignete Ansteuerung des Druckluftverteilers den Druck in den Luftreifen des Anhängers den jeweiligen Anforderungen anpassen zu können.

## Patentansprüche

1. Vorrichtung zur Steuerung des Luftdrucks in Luftreifen eines Anhängers einer landwirtschaftlichen Zugmaschine mit einem von einem Verdichter (2) beaufschlagbaren Druckluftspeicher (1) und mit einem an den Druckluftspeicher (1) anschließbaren, über Steuerventile mit den Luftreifen verbundenen Druckluftverteiler, **dadurch gekennzeichnet, dass** der mit dem Verdichter (2) eine als Frontgewicht an die landwirtschaftliche Zugmaschine anschließbare Baueinheit bildende Druckluftspeicher (1) einen Druckluftbehälter mit zwei durch einen Mittenabschnitt (4) verbundenen Seitenteilen (3) umfasst und dass der Verdichter (2) zwischen den beiden Seitenteilen (3) auf dem Mittenabschnitt (4) des Druckluftbehälters angeordnet ist.

2. Vorrichtung nach Anspruch 1, **dadurch gekennzeichnet, dass** der Druckluftbehälter im Bereich der der landwirtschaftlichen Zugmaschine zugekehrten Rückwand der Seitenteile (3) und auf einem die Seitenteile (3) verbindenden, den Mittenabschnitt (4) überbrückenden Träger (6) in einspringenden Ausnehmungen (13) angeordnete Anlenkachsen (11, 12) zum Anschließen des Druckluftbehälters an ein Fronthubwerk der Zugmaschine aufweist.

3. Vorrichtung nach Anspruch 1 oder 2, **dadurch gekennzeichnet, dass** der mit einem Boden (7), einer Decke (5) und einem Mantel (8) versehene Druckluftbehälter einerseits durch Fachböden (9) und anderseits durch die Fachböden (9) durchsetzende Steher (10) zwischen dem Boden (7) und der Decke (5) ausgesteift ist.

## Claims

1. Apparatus for controlling the air pressure in pneumatic tyres of a trailer of an agricultural tractor comprising a compressed air reservoir (1), which can be acted upon by a compressor (2), and a compressed air distributor which can be connected to the compressed air reservoir (1) and is connected to the pneumatic tyres by means of control valves, **characterised in that** the compressed air reservoir (1), which together with the compressor (2) forms a construction unit which can be connected as a front weight to the agricultural tractor, comprises a compressed air container having two side parts (3) which are connected by means of a central portion (4), and **in that** the compressor (2) is arranged between the two side parts (3) on the central portion (4) of the compressed air container.

2. Apparatus as claimed in claim 1, **characterised in that** the compressed air container has articulation axles (11, 12) for connecting the compressed air container to a front lifting mechanism of the tractor, said articulation axles being arranged in the region of the rear wall of the side parts (3) facing towards the agricultural tractor and on a carrier (6), which connects the side parts (3) and bridges the central portion (4), in re-entrant recesses (13).

3. Apparatus as claimed in claim 1 or 2, **characterised in that** the compressed air container which is provided with a bottom (7), a top (5) and a casing (8) is reinforced on the one hand by compartment bottoms (9) and on the other hand by uprights (10), which pass through the compartments (9), between the bottom (7) and the top (5).

## Revendications

1. Dispositif servant à commander la pression de l'air dans des pneumatiques d'une remorque d'un engin de traction agricole, avec un accumulateur d'air comprimé (1) pouvant être soumis à l'action exercée par un compresseur (2) et avec un distributeur d'air comprimé pouvant être raccordé à l'accumulateur d'air comprimé (1), relié aux pneumatiques par l'intermédiaire de soupapes de commande, **caractérisé en ce que** l'accumulateur d'air comprimé (1) formant avec le compresseur (2) une unité pouvant être raccordée en tant que lest avant à l'engin de traction agricole comprend un réservoir d'air comprimé avec deux parties latérales (3) reliées par une section centrale (4), et **en ce que** le compresseur (2) est disposé entre les deux parties latérales (3) sur la section centrale (4) du réservoir d'air comprimé.

2. Dispositif selon la revendication 1, **caractérisé en ce que** le réservoir d'air comprimé présente dans la zone de la paroi arrière, tournée vers l'engin de traction agricole, de la partie latérale (3) et sur un support (6) enjambant la section centrale (4), reliant la partie latérale (3), des axes d'articulation (11, 12) disposés dans des évidements (13) rentrants, pour le raccordement du réservoir d'air comprimé au niveau d'un relevage avant de l'engin de traction.

3. Dispositif selon la revendication 1 ou 2, **caractérisé en ce que** le réservoir d'air comprimé muni d'un fond (7), d'un couvercle (5) et d'une enveloppe (8) est raidi, d'une part, par des panneaux horizontaux (9) et d'autre part, par des montants (10) passant à travers les panneaux horizontaux (9), entre le fond (7) et le couvercle (5).
